# EUROPÄISCHE PATENTANMELDUNG

(11) **EP 1 043 568 A2**
(43) Veröffentlichungstag der Anmeldung: **11.10.2000**
(21) Anmeldenummer: 00104250.6
(22) Anmeldetag: 02.03.2000
(51) Int. Cl.: G01D 3/02

(54) **Messeinrichtung zur Ermittlung der Stellung eines Stellorgans**

(30) Priorität: 09.04.1999 DE 19915988
(71) Anmelder: Pierburg Aktiengesellschaft, 41460 Neuss (DE)
(72) Erfinder: Ludwig, Norbert, 41379 Brüggen (DE); Bürger, Frank, 52355 Düren (DE)

(57) **Zusammenfassung**

Die Erfindung betrifft eine Messeinrichtung zur Ermittlung der Stellung eines Stellorgans, beispielsweise einer Drosselklappe.

Zur Ermittlung der Stellung eines Stellorgans, das hohen Temperaturen ausgesetzt ist, werden mechanische Potentiometer verwendet, welche mit dem Stellorgan mechanisch verbunden sind. Die darüber ermittelten analogen Signale werden ausgangsseitig an einen A/D-Wandler und danach an einer Auswerteeinheit gegeben.
Nachteilig hierbei ist jedoch, dass die mechanischen Potentiometer einem hohen Verschleiss unterliegen, wodurch zusätzliche Störgrößen das Messergebnis verfälschen.
Einrichtungen zur berührungslosen elektronischen Winkelmessung (1) mit Hall-Elementen (4) sind zwar bekannt, jedoch bei höheren Temperaturen ausgeschlossen, da die Ausgangssignale der Hall-Elemente (4) sehr stark driften.

Demgegenüber sieht die vorliegende Lösung den Einsatz eines temperaturbeständigen Hall-Sensors (4) und die besondere Gestaltung eines Dauermagneten (2) vor, der über eine Achse (3) mit einem Stellorgan verbunden ist, um ein mechanisches Potentiometer einzusparen.
Bedingt durch den Hall-Effekt liefert der Hall-Sensor (4) bei Verstellung des Stellorgans und damit der Position des Dauermagneten (2) zum Hall-Sensor(4) ein Ausgangssignal (Uₐ), das vorzugsweise linear zur Verstellung des Stellorgans ist. Der Hall-Sensor (4) korrigiert dabei durch eine Programmierung temperaturbedingte Messfehler.

## Beschreibung

Die Erfindung betrifft eine Messeinrichtung zur Ermittlung der Stellung eines Stellorgans nach dem Oberbegriff des Patentanspruchs 1.

Zur Ermittlung der Stellung eines Stellorgans, wie beispielsweise einer Drosselklappe, das hohen Temperaturen ausgesetzt ist, werden in bekannter Art und Weise mechanische Potentiometer verwendet, welche mit dem Stellorgan mechanisch verbunden sind. Die darüber ermittelten analogen Signale werden ausgangsseitig an einen A/D-Wandler und danach an einer Auswerteeinheit gegeben.
Nachteilig hierbei ist jedoch, dass die mechanischen Potentiometer einem hohen Verschleiß unterliegen, wodurch zusätzliche Störgrößen das Messergebnis verfälschen.

Aus der DE 33 45 804 A1 ist ein Gerät zur berührungslosen elektronischen Winkelmessung eines mechanischen Stellgliedes bekannt. Hierbei ragt eine mit dem Stellglied mechanisch verbundene Welle aus dem Gerät, wobei an der Welle im Gerät ein drehbarer Magnet angebracht ist. Im Gehäuse gegenüber dem drehbaren Magneten ist ein Sensorelement angeordnet. Ein Einsatz von Hall-Elementen wird dabei ausgeschlossen, da das Gerät höheren Temperaturen ausgesetzt ist und dadurch die Ausgangssignale der Hall-Elemente sehr stark driften. Deshalb wird hierbei das Flux-Gate-Prinzip und nicht der Hall-Effekt ausgenutzt.

Verschiedene kontaktlose Längen- und/oder Winkelmesseinrichtungen mit Hall-Generatoren unter Ausnutzung des Hall-Effekts sind in der DE 44 05 513 A1, in der DE 44 08 056 C2 und auch in der DE 197 09 087 A1 offenbart. Auch diese Messeinrichtungen sind bei höheren Temperaturen in ihren Messergebnissen ungenau, da auch hier der Einfluss der Temperatur auf den Magneten und dessen Feldlinenstärkeintensität nicht ausgeschlossen wird.

Die Aufgabe der Erfindung besteht darin, eine Messeinrichtung zur Ermittlung der Stellung eines Stellorgans aufzuzeigen, mit der auch bei hohen Temperaturen ein genaues Messergebnis erreicht wird.

Dabei liegt der Erfindung die Idee zugrunde, durch den Einsatz eines temperaturbeständigen Hall-Sensors und der besonderen Gestaltung eines Dauermagneten, der über eine Achse mit einem Stellorgan verbunden ist, ein mechanisches Potentiometer einzusparen. Bedingt durch den Hall-Effekt liefert der Hall-Sensor bei Verstellung des Stellorgans und damit der Position des Dauermagneten zum Hall-Sensor ein Ausgangssignal, das vorzugsweise linear zur Verstellung des Stellorgans ist. Der Hall-Sensor korrigiert dabei durch eine Programmierung temperaturbedingte Messfehler.

Vorteilhafte Ausführungen sind in den Unteransprüchen enthalten.

Der Dauermagnet kann axial wie radial, diametral ausgeführt, zentrisch oder exzentrisch auf der Achse aufgebracht werden, so dass beispielsweise auch die Stellung eines Abgasrückführventils (AGR-Ventil) ermittelbar ist.
Da der verwendete Hall-Sensor programmierbar ist, kann mit Hilfe eines Schaltkreises wie eine ASIC-Einheit, die Messeinrichtung modulartig aufgebaut werden. Die Messeinrichtung ist platzsparend aufgebaut und besitzt an ihren Ausgängen gleichbleibende Schnittstellenausgänge. Im Incircuit-Gebrauch, d. h. imfunktionsgemässen Gebrauch, erfolgt die Kalibrierung und Programmierung des Hall-Sensors der Messeinrichtung, eine sonst notwendige Vorprogrammierung entfällt.

Durch diese Intelligenzfähigkeit der Messeinrichtung ist diese in der Lage, durch eine zusätzliche Selbstkontrolle ihre Funktionsfähigkeit zu überprüfen und auftretende Fehler zu melden.

Anhand eines Ausführungsbeispieles mit Zeichnung soll die Erfindung näher erläutert werden.

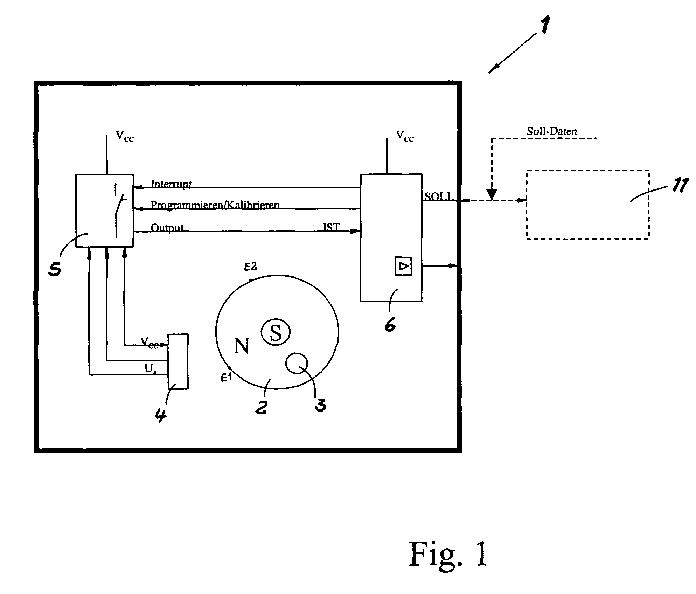

Es zeigt:
Fig. 1:
   in einer schematischen Darstellung eine erfindungsgemäße Messeinrichtung,
Fig. 2 :
   einen Spannungskennlinienverlauf im Ausgang eines Hall-Sensors in Abhängigkeit einer Verstellung eines Verstellorgans,
Fig. 3a, 3b, 3c:
   Varianten der Gestaltung eines Dauermagneten der Messeinrichtung aus Fig. 1.

In Fig. 1 ist eine modulartige Messeinrichtung 1 dargestellt, wobei mit 2 ein Dauermagnet bezeichnet ist, der auf einer Achse 3 befestigt ist, die mit einem nicht näher dargestellten Stellorgan, beispielsweise einer Drosselklappe, in mechanischer Verbindung steht. Dem Dauermagneten 2 ist in direkter Nähe ein Hall-Sensor 4 gegenüberliegend angeordnet. Dieser Hall-Sensor 4 ist temperaturbeständig und programmierbar. Mit dem Hall-Sensor 4 ist eine Logikschaltung 5 verknüpft, die mit einem Schaltkreis 6 einer ASIC-Einheit verbunden ist.
Im Ausführungsbeispiel nach Fig. 1 ist der Dauermagnet 2 auf der Achse 3 exzentrisch gelagert.

Vor dem funktionsgemässen Gebrauch der Messeinrichtung 1 wird der Hall-Sensor 4 kalibriert und danach programmiert. Dazu wird durch ein Interruptsignal des ASIC-Schaltkreises 6 die Logikschaltung 5 auf den Programmier-Kalibrier-Pfad geschaltet. Über eine bidirektionale Leitung, die auf den Hall-Sensor 4 geht, wird der Hall-Sensor 4 kurzzeitig durch das pulsweitenmodulierte Signal des ASIC-Schaltkreises 6 für die Programmierung stimuliert. Zuerst wird kalibriert, wobei Eckpunkte einer für den funktionsgemässen Gebrauch benötigten Kennlinie bestimmt werden. Geht man davon aus, dass eine Verstellung des Stellorgans in der Praxis in einem Winkelbereich γ von 7 ° bis 90° möglich ist, kann dabei festgelegt werden, dass beim Eckpunkt E1 ein Spannungswert Uₐ₁ einem Winkel γ₁ = 7° und beim Eckpunkt E2 ein Spannungswert Uₐₙ einem Winkel γₙ = 90° entspricht (wird noch ausgeführt).
Mit Hilfe der so ermittelten Eckpunkte E1, E2 wird im Hall-Sensor 4 eine im ASIC-Schaltkreis 6 hinterlegte Kennlinie über den Stellungswinkel γ des Stellorgans in eine äquivalente Spannungskennlinie umgewandelt. Dies erfolgt mit einer im Hall-Sensor 4 hinterlegten Software, die durch das pulsweitenmodulierte Signal des ASIC- Schaltkreises 6 angeregt wird. Bekanntermaßen verliert ein Magnet seine Feldlinienstärke bei Temperaturerhöhung. Dadurch kommt es bekanntlich zu Messungenauigkeiten. Dieser Einfluss auf den Dauermagneten 2 wird durch eine Temperaturkennlinienkorrektur korriegiert, die im Hall-Sensor 4 hinterlegt wird, da bekannt ist, welche Feldlinienabweichungen der verwendete Dauermagnet 2 bei bestimmten Temperaturen besitzt. Dadurch weist der Dauermagnet 2 für den Hall-Sensor 4 eine konstante Feldlinienstärke trotz Temperaturbeeinflussung auf.

Nach vollständige Kalibrierung/Programmierung des Hall-Sensors 4 erfolgt ein Umschalten in der Logikschaltung 5 auf die Versorgungsspannung V_{CC}, die über die bidirektionale Leitung an den Hall-Sensor 4 geschaltet wird. Vorzugsweise kann diese V_{CC} pulsweitenmoduliert sein.

In normaler Einbaulage des Dauermagneten 2 gegenüber dem Hall-Sensor 4 ist beispielsweise das Stellorgan geschlossen (E1= γ₁ = 7°), wobei dieser Eckpunkt E1 dem Hall-Sensor 4 direkt gegenüberliegt. Bei Verstellung des an der Achse 3 befestigten Stellorgans wird auch der Dauermagnet 2 mit verstellt, wodurch sich der Abstand des Dauermagneten 2 zum Hall-Sensor 4 verändert. Der Eckpunkt E1 entfernt sich vom Hall-Sensor 4, wobei sich der Dauermagnet 2 selbst dem Hall-Sensor 4 nähert, so dass die auf den Hall-Sensor 4 einwirkenden Feldlinien sich verstärken. Am Ausgang des Hall-Sensors 4 liegt eine Ausgangsspannung Uₐ ansteigend an. Mit einer Winkellage γ von ca. 90° hat der Dauermagnet 2 seine größte Annäherung an den Hall-Sensor 4.

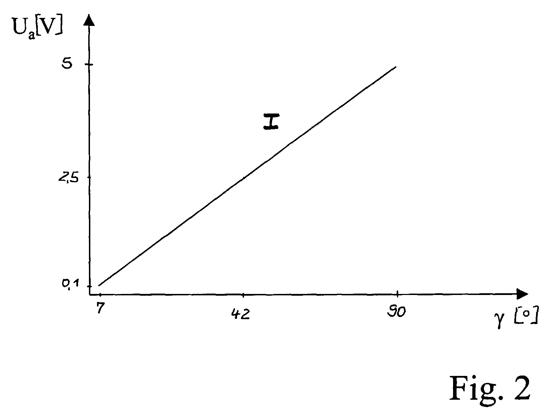

Die zugehörige Kennlinie I ist der Fig. 2 entnehmbar. Der einem Winkel γₙ = 90° äquivalente Spannungswert Uₐ beträgt dabei beispielsweise 5 Volt, der bei γ_{X} 42° ca. 2,5V. Dabei werden auch die durch den Temperatureinfluss auf den Dauermagneten 2 entstehenden Messungenauigkeiten mit berücksichtigt.
Somit liegen am Ausgang des Hall-Sensors 4 für die Stellung des Stellungsorgangs äquivalente temperaturunabhängige Spannungswerte Uₐ an.

Diese einzelnen Spannungswerte Uₐ gelangen über die Logikschaltung 5 und dessen Output als Ist-Werte zum Schaltkreis 6, wobei der Schaltkreis 6 von einer separaten Baugruppe (nicht näher dargestellt) über eine Soll-Leitung entsprechende Soll-Werte über die Winkellage/ Stellung des Stellungsorganes erhält. Dieses Ist-Signal Uₐ wird in bekannter Art und Weise zur weiteren Verarbeitung aus dem Schaltkreis 6, vorzugsweise spannungsverstärkt, ausgegeben.

Im Schaltkreis 6 selbst erfolgt zusätzlich ein Soll-Ist-Vergleich der Spannungswerte Uₐ und der Soll-Werte, die in entsprechende U_{Soll} umgewandelt wurden. Dieses Ergebnis wird aus dem Schaltkreis 6 über die bidirektionale Soll-Leitung als Rückmeldung, beispielsweise über die Funktionstüchtigkeit des Stellorgans, auf einen Diagnosetester 11 geschaltet.

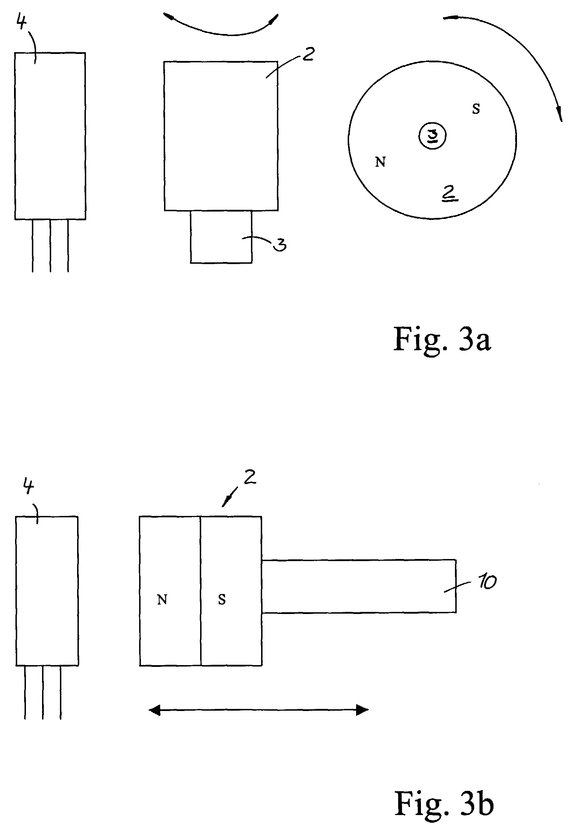

In Fig. 3a ist eine weitere Ausführungsform des Dauermagneten 2 aufgezeigt. So kann der Dauermagnet 2 auch ein Diametralmagnet sein. Hierbei weist die eine Hälfte eine Nord-Polung und die andere Hälfte eine Süd-Polung auf, wie es beispielsweise von länglichen Dauermagneten bekannt ist. Die notwendige Nord/Süd-Trennung wird im Hall-Sensor 4 während der Kalibrierung/ Programmierung definiert Durch diesen Aufbau werden zum Südübergang hin bzw. Nordübergang hin vom Hall-Sensor 4 kleiner werdende Feldstärken detektiert.

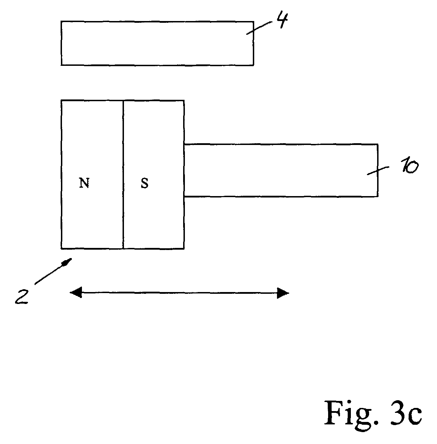

Auch kann der Dauermagnet 2 als axialer Dauermagnet 2 ausgeführt sein (Fig. 3b und 3c). Eine wie ein Stößel bewegbarer Achse 10 verändert den Abstand zwischen dem Hall-Sensor 4 und dem Dauermagneten 2 in axialer Richtung. Damit können auch Stellungen, beispielsweise eines AGR-Ventils ermittelt und diagnostiziert werden.

Der Vorteil der aufgezeigten Messeinrichtung 1 liegt neben dem kompakten modulartigen Aufbau auch in der kleineren Bauform. Es können die bekannten Anschlüsse eines mechanischen Potentiometers verwendet werden. Durch die Programmierung im Hall-Sensor 4 kann die Linerarität des bekannten Potentiometers nachgestaltet werden, wobei jedoch die Umwandlung von analogen Signalen eines Potentiometers in digitale verarbeitbare Signale entfällt. Am Ausgang des Hall-Sensors 4 liegt ein pulsweitenmoduliertes Signal an, das vom Schaltkreis 6 direkt verarbeitbar ist. Der Ausgang des Hall-Sensors 4 ist ratiometrisch und somit unabhängig von Spannungsschwankungen der Versorgungsspannung V_{CC}.

## Patentansprüche

1. Messeinrichtung zur Ermittlung der Stellung eines Stellorgans, aufweisend einen Dauermagneten, der über einer Achse mit dem Stellorgan in Verbindung steht, dadurch gekennzeichnet, dass
die Messeinrichtung (1) als ein in sich geschlossenes kompaktes intelligentes Messmodul ausgeführt ist, bei der
ein temperaturbeständiger, programmierbarer Hall-Sensor (4) dem Dauermagneten (2) in direkter Nähe gegenüberliegend zugeordnet ist,
der Hall-Sensor (4) mit einem Schaltkreis (6) verbunden ist, in der anwenderorientierte Kenndaten hinterlegt sind,
und Messungenauigkeiten durch Temperatureinflüsse auf den Dauermagneten (2) mittels beim Kalibrieren erzeugter Korrekturdaten im programmierten Hall-Sensor (4) korrigiert werden,
wodurch am Ausgang des Hall-Sensors (4) eine der Stellung des Stellorgans äquivalente Spannung (Uₐ) anliegt.

2. Messeinrichtung nach Anspruch 1, dadurch gekennzeichnet, dass der Dauermagnet (2) exzentrisch auf der Achse (3) gelagert ist.

3. Messeinrichtung nach Anspruch 1, dadurch gekennzeichnet, dass der Dauermagnet (2) diametral ausgeführt und zentrisch auf der Achse (3) befestigt ist.

4. Messeinrichtung nach Anspruch 1, dadurch gekennzeichnet, dass der Dauermagnet (2) radial zum Hall-Sensor (4) geführt auf einer Achse (10) angeordnet ist.

5. Messeinrichtung nach einem der vorgenannten Ansprüche 1 bis 4, dadurch gekennzeichnet, dass die Messeinrichtung (1) über eine elektrische Leitung (Soll) zusätzlich mit einem Diagnosegerät (11) verbunden ist.

6. Messeinrichtung nach einem der vorgenannten Ansprüche 1 bis 5, dadurch gekennzeichnet, dass der Hall-Sensor (4) über einer Logikschaltung (5) mit dem Schaltkreis (6) oder der Spannungsversorgung (V_{CC}) verbunden wird.
